# EUROPEAN PATENT SPECIFICATION

(11) **EP 3 047 212 B1**
(45) Date of publication and mention of the grant of the patent: **08.11.2017**
(21) Application number: 14777678.5
(22) Date of filing: 10.09.2014
(51) Int. Cl.: F23L 9/04, F23J 3/00, F27D 17/00, F23J 15/00

(54) **METHOD AND ARRANGEMENT FOR TREATING PROCESS GAS FLOWING FROM A PYROMETALLURGICAL FURNACE INTO A WASTE HEAT BOILER**
VERFAHREN UND ANORDNUNG ZUR BEHANDLUNG EINES AUS EINEM PYROMETALLURGISCHEN OFEN IN EINEN ABHITZEKESSEL STRÖMENDEN PROZESSGASES
PROCÉDÉ ET DISPOSITIF DE TRAITEMENT DES GAZ S'ÉCOULANT D'UN FOUR DE PYROMÉTALLURGIE DANS UNE CHAUDIÈRE DE RÉCUPÉRATION

(30) Priority: 18.09.2013 FI 20135936
(43) Date of publication of application: 27.07.2016
(73) Proprietor: Outotec (Finland) Oy, 02230 Espoo (FI)
(72) Inventor: PIENIMÄKI, Kari, FI-02270 Espoo (FI); AHOKAINEN, Tapio, FI-00830 Helsinki (FI); HUGG, Eero, FI-02200 Espoo (FI); MIETTINEN, Elli, FI-02320 Espoo (FI); JÅFS, Mikael, FI-02400 Kirkkonummi (FI)
(74) Representative: Boco IP Oy Ab
(86) International application number: PCT/FI2014/050688
(87) International publication number: WO 2015/040272

(56) References cited:
- EP-A1- 1 726 877
- DE-A1- 3 906 078
- GB-A- 1 379 168
- JP-A- 2004 301 449

## Description

### Field of the invention

The invention relates to a method for treating process gas flowing from a furnace space of a pyrometallurgical furnace into a waste heat boiler that is in fluid communication with the furnace space of the pyrometallurgical furnace at a connecting aperture as defined in the preamble of independent claim 1.

The invention also relates to an arrangement for treating process gas flowing from a furnace space of a pyrometallurgical furnace into a waste heat boiler that is in fluid communication with the furnace space of the pyrometallurgical furnace at a connecting aperture as defined in the preamble of independent claim 10.

By a pyrometallurgical furnace is in this context meant for example, but not excluding other types of pyrometallurgical furnaces, a suspension smelting furnace, a top submerged lance furnace i.e. a TSL furnace, or an electrical furnace.

In order to recover metals, such as copper, nickel or lead, from sulfidic raw materials containing said materials, for instance from ores or concentrates, a suspension smelting method may be applied, where heat amounts contained in finely divided sulfidic raw materials are utilized. In such suspension smelting method sulfidic raw material and oxygen-containing gas, such as air, oxygen-enriched air or oxygen is fed into a reaction shaft of a suspension smelting furnace. In addition, for instance flue dust recovered and recirculated from the process gases of the suspension smelting furnace, as well as metallurgic slag-forming agent, flux, is additionally fed into the reaction shaft of the suspension smelting furnace. In the reaction shaft of the suspension smelting furnace, the solid and gaseous feed materials react with each other, so that in the bottom part of the suspension smelting furnace, i.e. in the settler, there are formed at least two molten phases, a slag phase and a matte phase containing the metal to be recovered. The molten phases that are formed in the bottom part of the suspension smelting furnace are removed from the suspension smelting furnace at regular intervals. Sulfur dioxide containing process gases created in the reaction shaft of the suspension smelting furnace are conducted, via the settler, to an uptake shaft of the suspension smelting furnace, and from the uptake shaft further to a waste heat boiler connected to the suspension smelting furnace, in which waste heat boiler the process gases from the suspension smelting furnace are cooled, and at the same time the solids, i.e. flue dust, contained in the gas are removed.

When the suspension smelting furnace process gases are transferred from the uptake shaft of the suspension smelting furnace to the waste heat boiler, the flowing direction of the gases is changed from an essentially vertical direction to an essentially horizontal direction. Moreover, because the flowing area of the connecting aperture between the uptake shaft and the waste heat boiler is made essentially smaller than that of the uptake shaft in order to reduce the heat losses from the suspension smelting furnace, contacts of sulfur dioxide bearing process gases with the walls of the suspension smelting furnace cannot be avoided. Further, because the temperature of the process gases is dropped towards the top part of the uptake shaft of the suspension smelting furnace, molten particles contained in the process gases start to solidify, and when touching the uptake shaft walls, they attach to the wall, particularly in the vicinity of the connecting aperture between the uptake shaft and the waste heat boiler. Thus, in the vicinity of the connecting aperture, there is accumulated dust accretions or build-up that obstruct the flowing of the process gases and must therefore be broken apart. Removal of such build-up can be hazardous and required a shutdown.

Publication WO 02/01131 presents an apparatus for mechanically breaking up and detaching dust accretions created by process gases and accumulated on the inner walls of a suspension smelting furnace and/or a waste heat boiler permanently connected to the suspension smelting furnace. In this known solution, on the outer surface of the wall of the suspension smelting furnace and/or the waste heat boiler, in the vicinity of the connecting point of the suspension smelting furnace and the waste heat boiler, there is installed at least one striker device, whereby there can be created a mechanical impact effect and mechanical contact between the apparatus and at least one of the dust accretions.

Publication US 6,228,144 presents a method for operating waste heat boiler in flash-smelting furnace. In a copper flash-smelting works, forced oxidation of dust is prevented, adhesion of dust to a boiler water tube is reduced, and on-line ratio and productivity index is improved. The temperature at the WHB radiation section outlet is greatly reduced and the atmosphere within the WHB radiation section is controlled by blowing the mixed gas of nitrogen gas and air from the feed aperture established in the wall into the boiler radiation section of the waste heat boiler of the flash-smelting furnace in a copper flash-smelting works. GB1379168 A1 discloses the preamble of claims 1 and 4.

### Objective of the invention

The object of the invention is to provide a method and an arrangement for treating process gas flowing from a furnace space of a pyrometallurgical furnace into a waste heat boiler that is in fluid communication with the furnace space of a pyrometallurgical furnace at an opening with the aim to prevent or at least to minimized the formation of build-up in the connecting aperture between the furnace space of the pyrometallurgical furnace and the waste heat boiler.

### Short description of the invention

The method of the invention is characterized by the definition of independent claim 1. Preferred embodiments of the method are defined in the dependent claims 2 to 3. The arrangement of the invention is correspondingly characterized by the definition of independent claim 4. Preferred embodiments of the arrangement are defined in the dependent claims 5 and 6. The invention is based on providing the region of the connecting aperture between the furnace space of the pyrometallurgical furnace and the waste heat boiler with a gas blowing means for blowing gas into process gas flowing from the furnace space of the pyrometallurgical furnace into the waste heat boiler and on blowing gas with the gas blowing means into process gas flowing from the furnace space of the pyrometallurgical furnace into the waste heat boiler.

The invention provides for several advantages. Especially in suspension smelting furnaces the formation of build-up in the connecting aperture between the uptake shaft of a suspension smelting furnace and the waste heat boiler is prevented or at least reduced, because the gas cools down or extinguish the burning dust particles in the process gases quickly before they hit the surfaces of the connecting aperture and begin to form build-up. For example uneven burning of concentrate, feed disturbances or changes in physical or chemical properties of the feed in a suspension smelting process can lead to delayed burning of concentrate all the way through the waste heat boiler.

Especially in suspension smelting furnaces the gas can also be used for flushing the lower part of the connecting aperture between the uptake shaft of a suspension smelting furnace and the waste heat boiler and keep it cleaner from build-up and thereby improve the installation of a damper for temporary closing the connecting aperture between the uptake shaft of a suspension smelting furnace and the waste heat boiler.

Especially in suspension smelting furnaces the flue dust in process gas coming from the uptake shaft of the suspension smelting furnace off-gas must be sulfatized in order to achieve good flowing ability of the dust. The gas that is fed in the region of the connection aperture can also be used for sulfatizing particles in the process gas by mixing sulfatizing gas with the process gas. With the arrangement it is possible to eliminate or to reduce the amount of sulfation air nozzles in the waste heat boiler. Oxidic or sulfidic dust reacts together SO₃ and/or with SO₂ and oxygen from the sulfatation gas and forms metal sulfates.

### List of figures

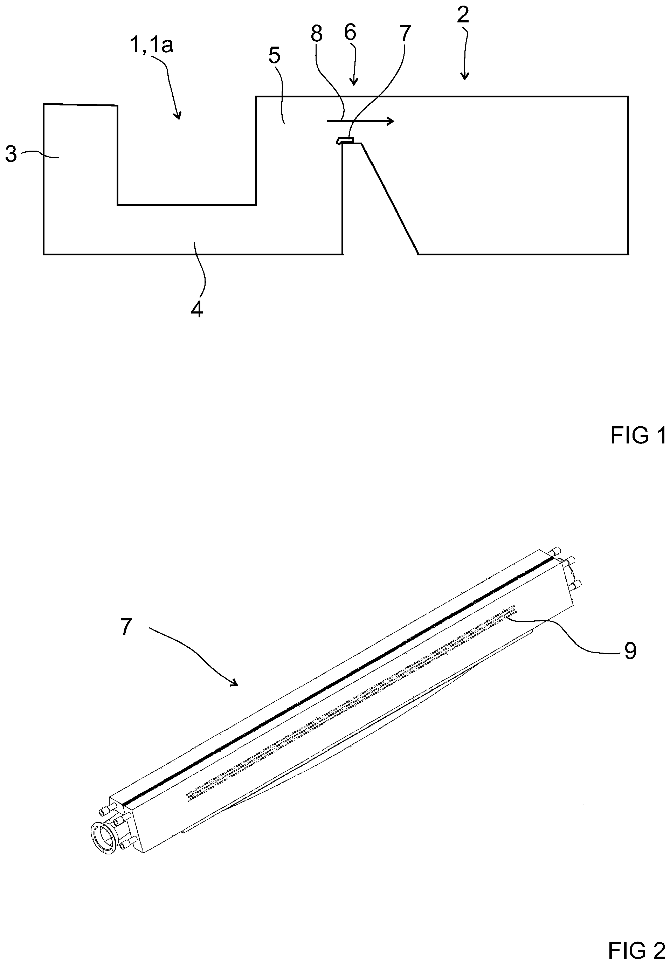

In the following the invention will described in more detail by referring to the figures of which
Figure 1 is a schematical side-view illustration of an installation comprising a suspension smelting furnace and a waste heat boiler that is connected to an uptake shaft of the suspension smelting furnace at an opening between the uptake shaft of the suspension smelting furnace and the waste heat boiler and where the region of the opening is provided with a gas blowing means,
Figure 2 shows a gas blowing means according to an embodiment,

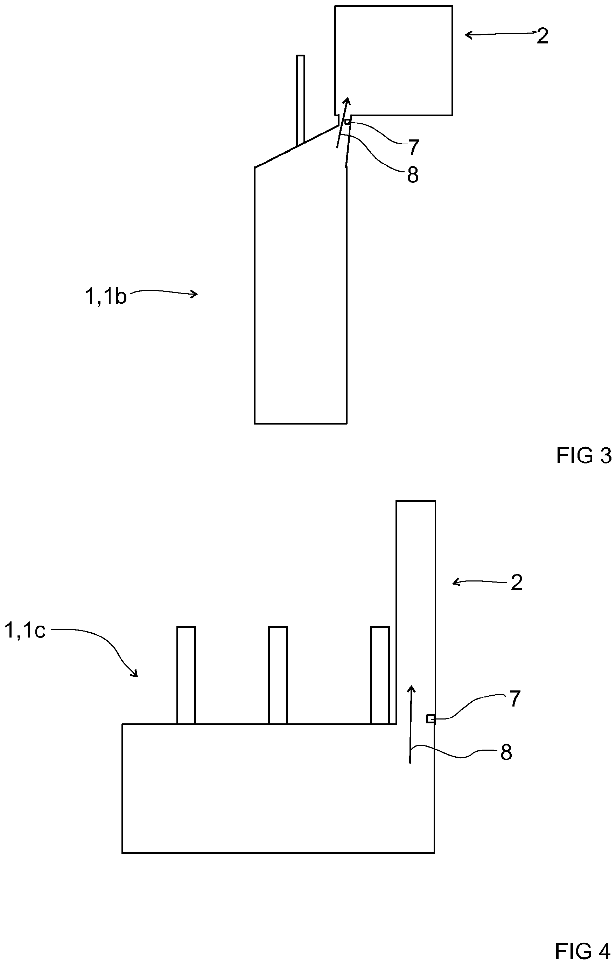

Figure 3 is a schematical side-view illustration of an installation comprising a top submerged lance furnace and a waste heat boiler that is connected to the top submerged lance furnace at an opening between the top submerged lance furnace and the waste heat boiler and where the region of the opening is provided with a gas blowing means, and
Figure 4 is a schematical side-view illustration of an installation comprising an electrical furnace and a waste heat boiler that is connected to the electrical furnace at an opening between the electrical furnace and the waste heat boiler and where the region of the opening is provided with a gas blowing means.

### Detailed description of the invention

The invention relates to a method and to an arrangement for treating process gas flowing from a furnace space of a pyrometallurgical furnace 1 into a waste heat boiler that is in fluid communication with the furnace space (not marked with a reference numeral) of the pyrometallurgical furnace 1 at a connecting aperture.

The pyrometallurgical furnace 1 that is used in the method or in the arrangement can for example be any one of the following: a suspension smelting furnace 1a such as a flash smelting furnace or a flash converting furnace, a top submerged lance furnace 1b, and an electrical furnace 1c.

Figure 1 shows an example of an installation comprising a pyrometallurgical furnace 1 in the form of a suspension smelting furnace 1a and a waste heat boiler 2. The suspension smelting furnace 1a comprises a reaction shaft 3 defining a reaction shaft space, a lower furnace 4 defining a lower furnace space, and an uptake shaft 5 defining an uptake shaft space. In figure 1 the furnace space of the pyrometallurgical furnace 1 is formed by the uptake shaft space of the uptake shaft 5 of the suspension smelting furnace 1a. The uptake shaft 5 of the suspension smelting furnace 1a is in fluid connection with the waste heat boiler 2 via a connecting aperture 6 so that process gas 8 that is produced in the suspension smelting process in the suspension smelting furnace 1a can flow from the uptake shaft 5 of the suspension smelting furnace 1a into the waste heat boiler 2. Because the basic function principle of such suspension smelting furnace 1a is known in the art for example from publication WO 2007/113375, neither the function principle of such suspension smelting furnace 1a nor the suspension smelting process will be described in greater detail here.

Figure 3 shows an example of an installation comprising a pyrometallurgical furnace 1 in the form of a top submerged lance furnace 1b and a waste heat boiler 2. In figure 5, the furnace space of the pyrometallurgical furnace 1 is formed by the furnace space (not marked with a reference numeral) of the top submerged lance furnace 1b. The furnace space of the top submerged lance furnace 1b is in fluid connection with the waste heat boiler 2 via a connecting aperture 6 so that process gas 8 that is produced in the smelting process in the top submerged lance furnace 1b can flow from the furnace space of the top submerged lance furnace 1b into the waste heat boiler 2.

Figure 4 shows an example of an installation comprising a pyrometallurgical furnace 1 in the form of an electrical furnace 1c and a waste heat boiler 2. In figure 6 the furnace space of the electrical furnace 1c is in fluid connection with the waste heat boiler 2 via a connecting aperture 6 so that process gas 8 that is produced in the smelting process in the electrical furnace 1c can flow from the furnace space of the electrical furnace 1c into the waste heat boiler 2.

First the method and some preferred embodiment and variants thereof will be described in greater detail.

The method comprises a providing step for providing the region of the connecting aperture 6, preferably the connecting aperture 6, between the furnace space of the pyrometallurgical furnace 1 and the waste heat boiler 2 with a gas blowing means 7 for blowing gas into process gas 8 flowing from the furnace space of the pyrometallurgical furnace 1 into the waste heat boiler 2.

The method comprises a blowing step for blowing gas with the gas blowing means 7 into process gas 8 flowing from the furnace space of the pyrometallurgical furnace 1 into the waste heat boiler 2.

The method comprises preferably, but not necessarily, using as gas in the blowing step at least one of the following: air, nitrogen-enriched air, oxygen-enriched air and inert gas such as nitrogen or argon.

The providing step of the method comprises providing a gas blowing means 7 in a lower region of the connecting aperture 6, and the blowing step of the method comprises blowing gas into the process gas 8 from below into process gas 8 flowing from the furnace space of the pyrometallurgical furnace 1 into the waste heat boiler 2.

The providing step of the method comprises providing a gas blowing means 7 having an elongate configuration and provided with several gas discharge openings 9 along the elongated configuration, and arranging the gas blowing means 7 to extend in the transverse direction of the flow of process gas 8 flowing from the furnace space of the pyrometallurgical furnace 1 into the waste heat boiler 2. The gas blowing means 7 is provided with a plurality of gas discharge openings 9.

In case the pyrometallurgical furnace 1 in the method is a suspension smelting furnace 1a, the method may include adjusting the amount of gas that is blown into process gas 8 flowing from the uptake shaft 5 of a suspension smelting furnace 1a into the waste heat boiler 2 based on a calculated sulfatization need of the process gas 8.

In case the pyrometallurgical furnace 1 in the method is a suspension smelting furnace 1a, the method may include adjusting the amount of gas that is blown into process gas 8 flowing from the uptake shaft 5 of a suspension smelting furnace 1a into the waste heat boiler 2 based on measured residual oxygen content in the process gas 8.

The providing step of the method comprises preferably, but not necessarily, providing a gas blowing means 7 at least partly in the connecting aperture 6 between the furnace space of the pyrometallurgical furnace 1; 1a; 1b; 1c and the waste heat boiler 2.

The blowing step of the method comprises blowing in the blowing step gas with the gas blowing means 7 into the connecting aperture 6 between the furnace space of the pyrometallurgical furnace 1; 1a; 1b; 1c and the waste heat boiler 2.

The blowing step of the method comprises blowing gas with the gas blowing means 7 into process gas 8 flowing from the furnace space of the pyrometallurgical furnace 1; 1a; 1b; 1c into the waste heat boiler 2 in the connecting aperture 6 between the furnace space of the pyrometallurgical furnace 1; 1a; 1b; 1c and the waste heat boiler 2.

Next the arrangement some preferred embodiments and variants of the arrangement will be described in greater detail.

In the arrangement the region of the connecting aperture 6 between the furnace space of the pyrometallurgical furnace 1 and the waste heat boiler 2 is provided with a gas blowing means 7 for blowing gas into process gas 8 flowing from the furnace space of the pyrometallurgical furnace 1 into the waste heat boiler 2.

The gas blowing means 7 are preferably, but not necessarily, configured for blowing at least one of air, nitrogen-enriched air, oxygen-enriched air and inert gas such as nitrogen or argon.

Gas blowing means 7 are provided in a lower region of the connecting aperture 6, and gas blowing means 7 provided in the lower region of the connecting aperture 6 are configured for blowing gas into the process gas 8 from below into process gas 8 flowing from the furnace space of the pyrometallurgical furnace 1 into the waste heat boiler 2.

The gas blowing means 7 may, as shown in figures 2 to 4, have an elongate configuration and be provided with several gas discharge openings along the elongated configuration, and the gas blowing means 7 extends in the transverse direction of the flow of process gas 8 flowing from the furnace space of the pyrometallurgical furnace 1 into the waste heat boiler 2. The gas blowing means 7 is provided with a plurality of gas discharge openings.

In case the pyrometallurgical furnace 1 in the arrangement is a suspension smelting furnace 1a, the arrangement may be configured to adjust the amount of gas that is blown into process gas 8 flowing from the furnace space of the pyrometallurgical furnace 1 into the waste heat boiler 2 based on the calculated sulfurization need.

In case the pyrometallurgical furnace 1 in the arrangement is a suspension smelting furnace 1a, the arrangement may be configured to adjust the amount of gas that is blown into process gas 8 flowing from the furnace space of the pyrometallurgical furnace 1 into the waste heat boiler 2 based on a measured residual oxygen content in the process gas 8.

The gas blowing means 7 are preferably, but not necessarily, provided at least partly in the connecting aperture 6 between the furnace space of the pyrometallurgical furnace 1; 1a; 1b; 1c and the waste heat boiler 2.

The gas blowing means 7 are preferably, but not necessarily, configured to blow gas into the connecting aperture 6 between the furnace space of the pyrometallurgical furnace 1; 1a; 1b; 1c and the waste heat boiler 2.

It is apparent to a person skilled in the art that as technology advanced, the basic idea of the invention can be implemented in various ways. The invention and its embodiments are therefore not restricted to the above examples, but they may vary within the scope of the claims.

## Claims

1. A method for treating process gas (8) flowing from a furnace space of a pyrometallurgical furnace (1; 1a; 1b; 1c) into a waste heat boiler (2) that is in fluid communication with the furnace space of the pyrometallurgical furnace (1; 1a; 1b; 1c) at a connecting aperture (6), comprising a providing step for providing the region of the connecting aperture (6) between the furnace space of the pyrometallurgical furnace (1; 1a; 1b; 1c) and the waste heat boiler (2) with a gas blowing means (7) for blowing gas into process gas (8) flowing from the furnace space of the pyrometallurgical furnace (1; 1a; 1b; 1c) into the waste heat boiler (2), and a blowing step for blowing gas with the gas blowing means (7) into process gas (8) flowing from the furnace space of the pyrometallurgical furnace (1; 1a; 1b; 1c) into the waste heat boiler, **characterized by** providing the gas blowing means (7) in a lower region of the connecting aperture (6) in the providing step,
by blowing in the blowing step gas with the gas blowing means (7) from below into process gas (8) flowing from the furnace space of the pyrometallurgical furnace (1; 1a; 1b; 1c) into the waste heat boiler (2) in the connecting aperture (6) between the furnace space of the pyrometallurgical furnace (1; 1a; 1b; 1c) and the waste heat boiler (2),
by providing in the providing step a gas blowing means (7) having an elongate configuration and provided with several gas discharge openings (9) along the elongated configuration, and
by arranging the gas blowing means (7) to extend in the transverse direction of the flow of process gas (8) flowing from the furnace space of the pyrometallurgical furnace (1; 1a; 1b; 1c) into the waste heat boiler (2) in the providing step.

2. The method according to claim 1, **characterized by** using as gas at least one of air, nitrogen-enriched air, oxygen-enriched air and inert gas such as nitrogen or argon in the blowing step.

3. The method according to claim 1 or 2, **characterized by** the pyrometallurgical furnace (1; 1a; 1b; 1c) that is used in the method being any one of the following: a suspension smelting furnace (1a) such as a flash smelting furnace or a flash converting furnace, a top submerged lance furnace (1b), and an electrical furnace (1c).

4. An arrangement for treating process gas (8) flowing from a furnace space of a pyrometallurgical furnace (1; 1a; 1b; 1c) into a waste heat boiler (2) that is in fluid communication with the furnace space of the pyrometallurgical furnace (1; 1a; 1b; 1c) at a connecting aperture (6),
wherein the arrangement comprises the pyrometallurgical furnace (1; 1a; 1d; 1c) having the furnace space, the waste heat boiler (2), and the connecting aperture (6) between the pyrometallurgical furnace (1; 1a; 1d; 1c) and the waste heat boiler (2), wherein the region of the connecting aperture (6) between the furnace space of the pyrometallurgical furnace (1; 1a; 1b; 1c) and the waste heat boiler (2) being provided with a gas blowing means (7) for blowing gas into process gas (8) flowing from the furnace space of the pyrometallurgical furnace(1; 1a; 1b; 1c) into the waste heat boiler (2), **characterized by** the blowing means (7) being provided in a lower region of the connecting aperture (6), by the gas blowing means (7) being configured to blow gas from below into process gas (8) flowing from the furnace space of the pyrometallurgical furnace (1; 1a; 1b; 1c) into the waste heat boiler (2) in the connecting aperture (6) between the furnace space of the pyrometallurgical furnace (1; 1a; 1b; 1c) and the waste heat boiler (2),
by the gas blowing means (7) having an elongate configuration and being provided with several gas discharge openings (9) along the elongated configuration, and
by the gas blowing means (7) extending in the transverse direction of the flow of process gas (8) flowing from the furnace space of the pyrometallurgical furnace (1; 1a; 1b; 1c) into the waste heat boiler (2).

5. The arrangement according to claim 4, **characterized by** the gas blowing means (7) being configured for blowing at least one of air, nitrogen-enriched air, oxygen-enriched air and inert gas such as nitrogen or argon.

6. The arrangement according to claim 4 or 5, **characterized by** the pyrometallurgical furnace (1; 1a; 1b; 1c) being any one of the following: a suspension smelting furnace (1a) such as a flash smelting furnace or a flash converting furnace, a top submerged lance furnace (1b), and an electrical furnace (1c).

## Patentansprüche

1. Verfahren zur Aufbereitung eines von einem Ofeninnenraum eines pyrometallurgischen Ofens (1; 1a; 1b; 1c) zu einem Abwärmekessel (2) fliessenden Prozessgases (8), der mit dem Ofeninnenraum des pyrometallurgischen Ofens (1; 1a; 1b; 1c) an einer Verbindungsöffnung (6) in Fluidverbindung steht, wobei das Verfahren
einen Schritt zur Bereitstellung, im Bereich der Verbindungsöffnung (6) zwischen dem Ofeninnenraum des pyrometallurgischen Ofens (1; 1a; 1b; 1c) und dem Abwärmekessel (2), von Mitteln (7) zum Blasen eines Gases in das vom Ofeninnenraum des pyrometallurgischen Ofens (1; 1a; 1b; 1c) zum Abwärmekessel (2) fliessenden Prozessgas (8), und
einen Schritt zum Blasen eines Gases mit Hilfe der Blasmittel (7) in das vom Ofeninnenraum des pyrometallurgischen Ofens (1; 1a; 1b; 1c) zum Abwärmekessel (2) fliessenden Prozessgas (8),
aufweist, **gekennzeichnet**
**durch** die Bereitstellung im Bereitstellungsschritt der Gasblasmittel (7) im unteren Bereich der Verbindungsöffnung (6),
durch das Blasen im Blasschritt des Gases mit Hilfe der Blasmittel (7) von unten in das vom Ofeninnenraum des pyrometallurgischen Ofens (1; 1a; 1b; 1c) zum Abwärmekessel (2) fliessenden Prozessgas (8) in der Verbindungsöffnung (6) zwischen dem Ofeninnenraum des pyrometallurgischen Ofens (1; 1a; 1b; 1c) und dem Abwärmekessel (2),
durch die Bereitstellung im Bereitstellungsschritt von Mitteln (7) zum Gasblasen mit einem langgezogenen Aufbau und mit mehreren Gasaustrittsöffnungen (9) längs des langgezogenen Aufbaus, und
durch die derartige Anordnung im Bereitstellungsschritt der Gasblasmittel (7), dass sie sich quer zur Fliessrichtung des vom Ofeninnenraum des pyrometallurgischen Ofens (1; 1a; 1b; 1c) zum Abwärmekessel (2) fliessenden Prozessgases (8) erstrecken.

2. Verfahren nach Anspruch 1, **gekennzeichnet durch** den Einsatz als Gas im Blasschritt zumindest eines der folgenden Gase: Luft, mit Stickstoff angereicherte Luft, mit Sauerstoff angereicherte Luft und Inertgas wie z.B. Stickstoff oder Argon.

3. Verfahren nach Anspruch 1 oder 2, **dadurch gekennzeichnet, dass** der im Verfahren zum Einsatz kommende pyrometallurgische Ofen (1; 1a; 1b; 1c) einer der folgenden Öfen: ein Schwebeschmelzofen (1a) wie z.B. ein Flash-Schmelzofen oder ein Flash-Veredlungsofen, ein Tauchlanzenofen (1b) und ein elektrischer Ofen (1c) ist.

4. Eine Anordnung zur Aufbereitung eines von einem Ofeninnenraum eines pyrometallurgischen Ofens (1; 1a; 1b; 1c) zu einem Abwärmekessel (2) fliessenden Prozessgases (8), der mit dem Ofeninnenraum des pyrometallurgischen Ofens (1; 1a; 1b; 1c) an einer Verbindungsöffnung (6) in Fluidverbindung steht,
wobei die Anordnung den pyrometallurgischen Ofen (1; 1a; 1b; 1c) mit dem Ofenraum, den Abwärmekessel (2) und die Verbindungsöffnung (6) zwischen dem pyrometallurgischen Ofen (1; 1a; 1b; 1c) und dem Abwärmekessel (2) aufweist,
wobei im Bereich der Verbindungsöffnung (6) zwischen dem Ofeninnenraum des pyrometallurgischen Ofen (1; 1a; 1b; 1c) und dem Abwärmekessel (2) Mittel (7) zum Blasen eines Gases in das vom Ofeninnenraum des pyrometallurgischen Ofens (1; 1a; 1b; 1c) zum Abwärmekessel (2) fliessenden Prozessgas (8), bereitgestellt sind, **gekennzeichnet**
**durch** die Bereitstellung der Blasmittel (7) im unteren Bereich der Verbindungsöffnung (6),
durch die Ausbildung der Gasblasmittel (7) zum Blasen des Gases von unten in das vom Ofeninnenraum des pyrometallurgischen Ofens (1; 1a; 1b; 1c) zum Abwärmekessel (2) fliessenden Prozessgas (8) in der Verbindungsöffnung (6) zwischen dem Ofeninnenraum des pyrometallurgischen Ofens (1; 1a; 1b; 1c) und dem Abwärmekessel (2),
durch einen langgezogenen Aufbau der Gasblasmittel (7) und die Bereitstellung mehrerer Gasaustrittsöffnungen (9) längs dieses langgezogenen Aufbaus, und
durch das Erstrecken der Gasblasmittel (7) quer zur Fliessrichtung des vom Ofeninnenraum des pyrometallurgischen Ofens (1; 1a; 1b; 1c) zum Abwärmekessel (2) fliessenden Prozessgases (8).

5. Anordnung nach Anspruch 4, **gekennzeichnet durch** die Ausbildung der Gasblasmittel (7) zum Blasen zumindest eines der folgenden Gase: Luft, mit Stickstoff angereicherte Luft, mit Sauerstoff angereicherte Luft und Inertgas wie z.B. Stickstoff oder Argon.

6. Anordnung nach Anspruch 4 oder 5, **gekennzeichnet durch** einen pyrometallurgischen Ofen (1; 1a; 1b; 1c), der einer der folgenden Öfen: ein Schwebeschmelzofen (1a) wie z.B. ein Flash-Schmelzofen oder ein Flash-Veredlungsofen, ein Tauchlanzenofen (1b) und ein elektrischer Ofen (1c) ist.

## Revendications

1. Méthode pour le traitement d'un gaz de procédé (8) circulant d'une chambre de four d'un four pyrométallurgique (1; 1a; 1b; 1c) dans une chaudière de récuperation de chaleur (2) qui est en communication de fluide avec la chambre de four du four pyrométallurgique (1; 1a; 1b; 1c) au niveau d'une ouverture de connexion (6),
comprenant
une étape de fourniture pour fournir la région de l'ouverture de connexion (6) entre la chambre de four du four pyrométallurgique (1; 1a; 1b; 1c) et la chaudière de récuperation de chaleur (2) en des moyens de soufflage du gaz (7) pour souffler du gaz dans le gaz de procédé (8) circulant de la chambre de four du four pyrométallurgique (1; 1a; 1b; 1c) dans la chaudière de récuperation de chaleur (2), et
une étape de soufflage pour souffler du gaz au moyens des moyens de soufflage du gaz (7) dans le gaz de procédé (8) circulant de la chambre de four du four pyrométallurgique (1; 1a; 1b; 1c) dans la chaudière de récuperation de chaleur (2), **caractérisée par**
la fourniture les moyens de soufflage du gaz (7) dans une zone inférieure de de l'ouverture de connexion (6) dans l'étape de fourniture,
le soufflage du gaz dans l'étape de soufflage au moyens des moyens de soufflage du gaz (7) dans le gaz de procédé (8) circulant de la chambre de four du four pyrométallurgique (1; 1a; 1b; 1c) dans la chaudière de récuperation de chaleur (2) par l'ouverture de connexion (6) entre la chambre de four du four pyrométallurgique (1; 1a; 1b; 1c) et la chaudière de récuperation de chaleur (2),
la fourniture dans l'étape de fourniture un moyen de soufflage du gaz (7) ayant une configuration allongée et fourni en plusieurs ouvertures de décharge du gaz (9) le long de la configuration allongée, et
l'agencement des moyens de soufflage du gaz (7) de façon de s'étendre dans la direction transversale relatif à la circulation du gaz de procédé (8) circulant de la chambre de four du four pyrométallurgique (1; 1a; 1b; 1c) dans la chaudière de récuperation de chaleur (2) dans l'étape de fourniture.

2. Méthode selon la revendication 1, **caractérisée par** l'utilisation en tant que le gaz au moins un gaz parmi l'air, l'air enrichi en azote, l'air enrichi en oxygène et un gaz inerte comme l'azote ou l'argon dans l'étape de soufflage.

3. Méthode selon la revendication 1 ou 2, **caractérisée par** le four pyrométallurgique (1; 1a; 1b; 1c) utilisé dans la méthode étant un four quelconque parmi les fours suivantes: un four de fusion en suspension (la) tel qu'un four de fusion "flash" ou un four de conversion "flash", un four du type de la lance submergée par le haut (1b) et un four électrique (1c).

4. Agencement pour le traitement d'un gaz de procédé (8) circulant d'une chambre de four d'un four pyrométallurgique (1; 1a; 1b; 1c) dans une chaudière de récuperation de chaleur (2) qui est en communication de fluide avec la chambre de four du four pyrométallurgique (1; 1a; 1b; 1c) au niveau d'une ouverture de connexion (6),
l'agencement comprenant
le four pyrométallurgique (1; 1a; 1b; 1c) avec la chambre de four, la chaudière de récuperation de chaleur (2) et l'ouverture de connexion (6) entre le four pyrométallurgique (1; 1a; 1b; 1c) et la chaudière de récuperation de chaleur (2),
dans lequel
la région de l'ouverture de connexion (6) entre la chambre de four du four pyrométallurgique (1; 1a; 1b; 1c) et la chaudière de récuperation de chaleur (2) étant fournie en des moyens de soufflage du gaz (7) pour souffler du gaz dans le gaz de procédé (8) circulant de la chambre de four du four pyrométallurgique (1; 1a; 1b; 1c) dans la chaudière de récuperation de chaleur (2),
**caractérisé par**
les moyens de soufflage du gaz (7) fournis dans une zone inférieure de de l'ouverture de connexion (6) dans l'étape de fourniture,
les moyens de soufflage du gaz (7) configurés pour le soufflage du gaz par le bas le gaz de procédé (8) circulant de la chambre de four du four pyrométallurgique (1; 1a; 1b; 1c) dans la chaudière de récuperation de chaleur (2) par l'ouverture de connexion (6) entre la chambre de four du four pyrométallurgique (1; 1a; 1b; 1c) et la chaudière de récuperation de chaleur (2),
les moyens de soufflage du gaz (7) ayant une configuration allongée et fournis en plusieurs ouvertures de décharge du gaz (9) le long de la configuration allongée, et
les moyens de soufflage du gaz (7) s'étendant dans la direction transversale relatif à la circulation du gaz de procédé (8) circulant de la chambre de four du four pyrométallurgique (1; 1a; 1b; 1c) dans la chaudière de récuperation de chaleur (2).

5. Agencement selon la revendication 4, **caractérisée par** les moyens de soufflage du gaz (7) configurés pour le soufflage d'au moins un gaz parmi l'air, l'air enrichi en azote, l'air enrichi en oxygène et un gaz inerte comme l'azote ou l'argon dans l'étape de soufflage.

6. Agencement selon la revendication 4 ou 5, **caractérisée par** le four pyrométallurgique (1; 1a; 1b; 1c) étant un four quelconque parmi les fours suivantes: un four de fusion en suspension (1a) tel qu'un four de fusion "flash" ou un four de conversion "flash", un four du type de la lance submergée par le haut (1b) et un four électrique (1c).
